Europäisches Patentamt

European Patent Office

Office européen des brevets

(11) Veröffentlichungsnummer: **0 490 461 A1**

# EUROPÄISCHE PATENTANMELDUNG

(21) Anmeldenummer: **91250313.3**

(22) Anmeldetag: **14.11.91**

(51) Int. Cl.5: **F01N 7/14**, F16L 59/147

(30) Priorität: **10.12.90 DE 4039735**

(43) Veröffentlichungstag der Anmeldung:
**17.06.92 Patentblatt 92/25**

(84) Benannte Vertragsstaaten:
**DE ES FR GB IT SE**

(71) Anmelder: **MANNESMANN Aktiengesellschaft**
**Mannesmannufer 2**
**W-4000 Düsseldorf 1(DE)**

(72) Erfinder: **Janssen, Manfred, Dr.-Ing.**
**Moerser Strasse 398**
**W-4150 Krefeld(DE)**
Erfinder: **Bernauer, Otto, Dr. rer. nat.**
**Zillestrasse 20**
**W-4130 Moers(DE)**
Erfinder: **Vogt, Gerd, Dr.-Ing.**
**Brucknerstrasse 18**
**W-4005 Meerbusch-Strümp(DE)**

(74) Vertreter: **Meissner, Peter E., Dipl.-Ing. et al**
**Patentanwaltsbüro Meissner & Meissner,**
**Herbertstrasse 22**
**W-1000 Berlin 33(DE)**

(54) **Wärmegedämmtes Auspuffrohr und Verfahren zur Herstellung desselben.**

(57) Die Erfindugn betrifft ein wärmegedämmtes Auspuffrohr bestehend aus einem tragenden metallischen Außenrohr und einer innen angeordneten metallischen Auskleidung mit einer festen Lagenzuordnung von Auskleidung und Außenrohr, die isolierend voneinander getrennt sind. Um eine verbessertes wärmegedämmtes und biegbares Auspuffrohr für Kraftfahrzeuge anzugeben, das eine längere Standzeit aufweist und dessen Oberflächentemperatur im Dauerbetrieb einen Wert von 200 Grad Celsius nicht übersteigt und durch welches das Betriebsverhalten optimiert und die Standzeit des Katalysators verlängert werden, wird vorgeschlagen, daß das Auspuffrohr als Doppelwandrohr ausgebildet ist mit einem in das Außenrohr (1) eingeschobenen und kraftschlüssig mit diesem verbundenen Innenrohr (2), welches aus einem hitze- und zunderbeständigen Werkstoff hergestellt ist und vom Außenrohr (1) isolierend (3) getrennt ist, wobei die äußere Seite des Außenrohres (1) eine korrosionsbeständige Schicht aufweist und an einem Ende des Außenrohres (1) ein wellenkompensatorähnliches Element angeordnet ist.

EP 0 490 461 A1

Die Erfindung betrifft ein wärmegedämmtes Auspuffrohr gemäß dem Gattungsbegriff des Hauptanspruches sowie ein Verfahren zur Herstellung desselben.

Moderne Personenkraftfahrzeuge sind in neuerer Zeit überwiegend mit einem Katalysator ausgerüstet, der seine schadstoffabbauende Wirkung nur in einem bestimmten Temperaturbereich voll entfalten kann. Dazu ist es erforderlich, daß in der Startphase, wenn der Motor noch kalt ist, der Katalysator möglichst schnell auf Betriebstemperatur gebracht wird. Dies kann man am ehesten durch ein wärmegedämmtes Auspuffrohr erreichen, das dafür sorgt, daß die am Auspuffkrümmer austretenden heißen Auspuffgase mit nur geringen Temperaturverlusten an den Katalysator herangeführt werden. Ein solches wärmegedämmtes Auspuffrohr ist aus der DE-GM 7614072 bekannt. Es besteht aus einem tragenden Außenrohr und einem innenliegenden koaxial dazu angeordneten Einsatzrohr und einer zwischen Außenrohr und Einsatzrohr liegenden Zwischenlage aus einer Mineralfaserschicht. Nach Befestigung des Einsatzrohres durch Verschweißen mit dem Außenrohr wird das Doppelwandrohr durch Biegen in seine endgültige Form gebracht. Nachteilig bei dieser Konstruktion ist, daß zum Biegen enger Radien das Einsatzrohr in Querrichtung geschlitzt werden muß und die Genauigkeit des Schließens der Schlitze vom Biegeradius abhängig ist.

Eine vergleichbare Konstruktion eines doppelwandigen Auspuffrohres ist der DE-OS 39 20 600 zu entnehmen. Die isolierende Schicht wird zwischen Innen- und Außenrohr angebracht und vor dem Biegen des Doppelwandrohres in die Endform wird die isolierende Schicht durch plastisches Aufweiten des Innenrohres verdichtet. Auch bei dieser Konstruktion sind die Biegeradien begrenzt, da ohne Innenabstützung das Innenrohr bei zu starker Biegung Falten wirft.

Aufgabe der Erfindung ist es, ein verbessertes wärmegedämmtes Auspuffrohr für Kraftfahrzeuge anzugeben, das leicht herstellbar ist und enge Biegeradien erlaubt. Außerdem soll die Standzeit verlängert werden, wobei im Dauerbetrieb die Oberflächentemperatur gleich kleiner 200 Grad Celsius betragen soll.

Diese Aufgabe wird mit den im kennzeichnenden Teil des Anspruches 1 angegebenen Merkmalen gelöst. Vorteilhafte Weiterbildungen sind in den Unteransprüchen festgelegt. Außerdem wird ein Verfahren zur Herstellung eines speziell ausgebildeten wärmegedämmten Auspuffrohres angegeben.

Das erfindungsgemäße wärmegedämmte Auspuffrohr zeichnet sich dadurch aus, daß die Isolation sehr wirkungsvoll ist und dadurch im Dauerbetrieb die Temperatur an der äußeren Oberfläche auf einen Wert von unter 200 Grad Celsius begrenzt wird. Dies ist von Vorteil für die Menge der Wärmeabstrahlung vom heißen Auspuffrohr auf den Boden des Kraftfahrzeuges. Wie bekannt, ist die abgestrahlte Wärmemenge proportional der dritten Potenz der Temperatur der strahlenden Wand, so daß jede Verringerung dieser Temperatur zu einer überproportionalen Verringerung der abgestrahlten Wärmemenge führt. Mit dieser Begrenzung wird die nicht erwünschte Aufheizung des Bodens des Kraftfahrzeuges verringert, was sich zum einen vorteilhaft auf den Komfort und zum anderen schonend auf den Korrosionsschutz auf der Unterseite des Bodens auswirkt. Das Doppelwandrohrprinzip hat im Hinblick auf die Verwendung als Auspuffrohr den Vorteil, daß der Werkstoff für das Innenrohr gezielt auf die erforderliche hohe Temperaturbeständigkeit ausgesucht werden kann und der ansonsten gleichfalls erforderliche Korrosionsschutz in den Hintergrund tritt. Dieser Korrosionsschutz wird vom Außenrohr übernommen, sei es durch die Verwendung eines nichtrostenden Werkstoffes oder durch eine entsprechende Schutzschicht auf dem Außenrohr. Diese Schutzschicht kann aus einer flammgespritzten oder durch Tauchen aufgebrachten Metallschicht bestehen, z. B. Aluminium oder Zink oder vergleichbare Werkstoffe oder durch Aufwickeln oder Bekleben einer korrosionsbeständigen dünnen Folie aus Metall oder eines hochwarmfesten Kunststoffes.

Der Dehnungsausgleich zwischen dem mit hoher Temperatur beaufschlagten Innenrohr und dem mit niedrigerer Temperatur beaufschlagten Außenrohr erfolgt über ein an dem Außenrohr angeordnetes wellenkompensatorähnliches Element. In der einfachsten Form ist dies ein metallischer Faltenbalg, der am Außenrohr angeschweißt ist. Die unterschiedliche Ausdehnung wird dann besonders groß, wenn, wie vorgesehen, die verwendeten Werkstoffe für das Außen- und das Innenrohr bezüglich ihres Ausdehnungskoeffizienten stark unterschiedlich sind. Für die lagengenaue Zuordnung des Außen- zum Innenrohr wird in der einfachsten Ausführung ein hochfester asbestfreier Wärmedämmstoff, wie z. B. eine Keramikfaser aus $SiO_2$ mit einer Dicke im Bereich von 2 - 4 mm verwendet. Die Herstellung eines solchen Doppelwandrohres erfolgt in der Weise, daß das mit einer Dämmlage versehene Innenrohr nach dem Hineinschieben in das Außenrohr durch einen Aufweitevorgang auf die Innenwand des Außenrohres gepreßt wird. Die Isolierwirkung kann man noch in der Weise verbessern, wenn weiterbildend der Zwischenraum durch ein Metallhydrid vakuumisoliert wird. Dieses Verfahren ist im Prinzip bekannt (EP 0 347 367) und wird vorwiegend für elektrische Röhren und Flüssiggasleitungen angewandt. Damit ein solches Doppelwandrohr aber weiterhin gebogen werden kann, ist es erforderlich, ein abstützendes Gitter in dem Zwischenraum anzuordnen. Solche Gitteranordnungen sind ebenfalls im Prinzip bekannt (DE-PS 2525045), wobei der Verwendungszweck sich auf die Schalldämmung bezieht. Die Isolationswirkung kann noch weiter gesteigert werden, wenn man den vakuumisolierten Zwischenraum vor dem Evakuieren mit einem schüttfähigen Isolationsstoff auffüllt. Solche Stoffe können kurze Glasfaserstükke oder feinkörnige, pulverartige Stoffe wie Kieselgur sein mit einem mittleren Durchmesser des einzelnen Kornes von kleiner 50 $\mu$m. Ein besonderer Effekt ist dann erzielbar, wenn für das Evakuieren ein Metallhydrid mit einer bestimmten Springtemperatur verwendet wird. Unterhalb dieser Temperatur wird der Wasserstoff vom Metallhydrid absorbiert, so daß das Vakuum aufrechterhalten bleibt und die Isolationswirkung entsprechend groß ist. Oberhalb dieser Temperatur wird der Wasserstoff aber wieder freigegeben und damit wärmeleitende Brücken gebildet. Dies kann man temperaturmäßig so steuern, daß der Katalysator nicht überhitzt wird, falls durch Dauerbetrieb des Motors und extreme Bedingungen (sommerliche Außentemperaturen, Kriechgang im Stau) die Auspuffgase Maximalwerte erreichen.

Es ist bekannt, daß der Biegefähigkeit des vorher beschriebenen Doppelwandrohres Grenzen gesetzt sind. Aus diesem Grunde wird weiterbildend vorgeschlagen, für die metallische Innenauskleidung eine dünne Folie mit einer Wanddicke kleiner 0,5 mm vorzugsweise 0,2 mm zu verwenden. Dies hat den Vorteil, daß das tragende Außenrohr zuerst entsprechend den Vorgaben gebogen werden kann und anschließend die Folie eingeschoben wird. Damit die Isolationswirkung erhalten bleibt, wird die Folie zuvor mit einer Dämmlage versehen. Die Herstellung des gekrümmten Auspuffrohres kann so erfolgen, daß zuerst die Folie mittels einer Negativform des auszukleidenden Hohlkörpers zu einem Hohlkörper geformt und entlang der berührenden Ränder punkt- oder linienförmig verschweißt wird und danach die Dämmschicht aufgeklebt oder aufgepreßt wird. Der so gebildete dünnwandige Hohlkörper ist noch faltbar, so daß er leicht in das bereits gebogene Außenrohr geschoben werden kann. Danach erfolgt die faltenfreie Aufweitung entweder mechanisch oder hydraulisch. Eine der Möglichkeiten der mechanischen Aufweitung besteht darin, eine im Durchmesser angepaßte Kugel durch die gefaltete Folie zu ziehen, wobei darauf zu achten ist, daß während des Durchziehens die Folie axial fixiert ist.

Eine besonders vorteilhafte Anwendung dieses Verfahrens ergibt sich für die Herstellung eines wärmegedämmten Abgaskrümmers. Bei dem räumlich sehr komplizierten Abgaskrümmersystem ist die Anordnung einer Innendämmschicht schwierig und aufwendig. Das vorgeschlagene Verfahren des Einschiebens einer gefalteten wärmegedämmten metallischen Folie ist ein eleganter Weg zur Überwindung dieses Problems.

Die Wärmedämmung des Abgaskrümmers hat im Hinblick auf die zunehmende Tendenz der Kapselung des Motorraumes an Bedeutung gewonnen. Da durch die Kapselung leicht ein Wärmestau entsteht, muß dafür gesorgt werden, daß die abgestrahlte Wärme möglichst gering ist. Die Kapselung des Motorraumes wiederum wird durch die immer lauter werdende Forderung nach Absenkung des Geräuschpegels eines Kraftfahrzeuges von den Konstrukteuren erzwungen.

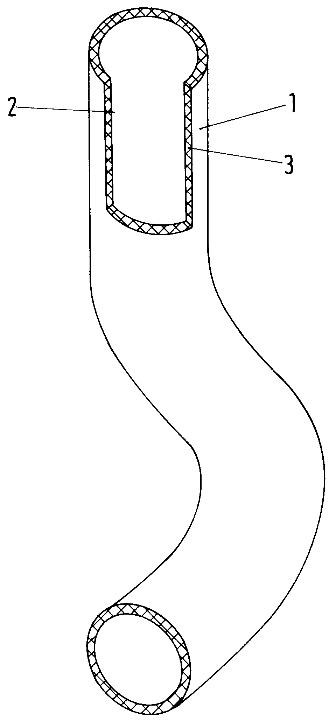

In der Zeichnung wird anhand eines Ausführungsbeispieles das erfindungsgemäße wärmegedämmte Auspuffrohr näher erläutert.

Die einzige Figur zeigt einen Abschnitt eines Auspuffrohres mit einer durch die Kontur des Unterbodens des Kraftfahrzeuges erforderlichen Biegung. Das Auspuffrohr ist als Doppelwandrohr ausgebildet mit einem metallischen Außenrohr 1 und einem aus einem hitze- und zundersbeständigen Werkstoff hergestellten Innenrohr 2, welches durch eine Dämmlage 3 isolierend vom Außenrohr 1 getrennt ist. Im Hinblick auf den Korrosionsschutz kann das Außenrohr 1 aus einem nichtrostenden Werkstoff bestehen oder mit einer Schutzschicht, z. B. Al oder Zn versehen sein. In diesem Ausführungsbeispiel ist die Isolierung 3 ein Vollmaterial, das kraftschlüssig zwischen Innen 2- und Außenrohr 1 gepreßt ist. Das erfindungsgemäße Doppelwandrohr ist in der hier gezeigten Anordnung in einem weiten Bereich biegefähig, da die eingepreßte Dämmlage 3 ohne Einschränkung mitverformt werden kann.

## Patentansprüche

1. Wärmegedämmtes Auspuffrohr bestehend aus einem tragenden metallischen Außenrohr und einer innen angeordneten metallischen Auskleidung mit einer festen Lagenzuordnung von Auskleidung und Außenrohr, die isolierend voneinander getrennt sind,
**dadurch gekennzeichnet,**
daß die metallische Auskleidung eine aus einem hitze- und zunderbeständigen Werkstoff hergestellte faltbare Folie ist mit einer Wanddicke kleiner 0,5 mm, vorzugsweise 0,2 mm und die äußere Seite des Außenrohres (1) eine korrosionsbeständige Schicht aufweist und an einem Ende des Außenrohres (1) ein wellenkompensatorähnliches Element angeordnet ist.

2. Wärmegedämmtes Auspuffrohr nach Anspruch 1,
**dadurch gekennzeichnet,**

daß der Zwischenraum mit einer aus einem hochfesten asbestfreien Wärmedämmstoff bestehenden Dämmlage (3) ausgefüllt ist.

3. Wärmegedämmtes Auspuffrohr nach Anspruch 2,
   **dadurch gekennzeichnet,**
   daß der Wärmedämmstoff aus einer Keramikfaser aus $SiO_2$ mit einer Dicke im Bereich von 2 - 4 mm besteht.

4. Verfahren zur Herstellung eines wärmegedämmten Auspuffrohres entsprechen den Ansprüchen 1 und 2,
   **dadurch gekennzeichnet,**
   daß die mit einem Wärmedämmstoff versehene Folie zuerst zu einem Rohr geformt und danach mindestens einmal in Längsrichtung gefaltet und in das Außenrohr geschoben und anschließend durch mechanische oder hydraulische Aufweitung an der Innenwand des Außenrohres faltenfrei zur Anlage gebracht wird.

5. Verfahren nach Anspruch 4,
   **dadurch gekennzeichnet,**
   daß zur mechanischen Aufweitung eine Kugel durch die gefaltete Folie gezogen wird, wobei die Folie während des Durchziehens axial fixiert ist.

Europäisches
Patentamt

**EUROPÄISCHER RECHERCHENBERICHT**

Nummer der Anmeldung

EP    91 25 0313

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-3 043 363 (JOHNS-MANVILLE CORP.) <br> * Seite 12, Zeile 1 - Seite 17, Zeile 25; Abbildung 3 * <br> --- | 1-3 | F01N7/14 <br> F16L59/147 |
| A | DE-A-3 521 467 (G + H MONTAGE GMBH) <br> * das ganze Dokument * <br> --- | 1,2 | |
| P,A | EP-A-0 431 649 (V.W. WERKE VINCENZ WIEDERHOLT GMBH & CO KG) <br> * das ganze Dokument * <br> ----- | 1,4 | |
| | | | RECHERCHIERTE SACHGEBIETE (Int. Cl.5 ) |
| | | | F01N <br> F16L |

Der vorliegende Recherchenbericht wurde für alle Patentansprüche erstellt

| Recherchenort | Abschlußdatum der Recherche | Prüfer |
|---|---|---|
| DEN HAAG | 04 MAERZ 1992 | HAKHVERDI M. |